**Europäisches Patentamt**

**European Patent Office**

**Office européen des brevets**

(19)

(11) Veröffentlichungsnummer: **0 274 985 B1**

# EUROPÄISCHE PATENTSCHRIFT

(12)

(45) Veröffentlichungstag der Patentschrift: **03.07.91**

(51) Int. Cl.⁵: **B60J 5/04**

(21) Anmeldenummer: **87810697.0**

(22) Anmeldetag: **26.11.87**

(54) **Fahrzeugtüre.**

(30) Priorität: **11.12.86 CH 4944/86**

(43) Veröffentlichungstag der Anmeldung:
**20.07.88 Patentblatt 88/29**

(45) Bekanntmachung des Hinweises auf die
Patenterteilung:
**03.07.91 Patentblatt 91/27**

(84) Benannte Vertragsstaaten:
**AT BE CH DE ES FR GB GR IT LI LU NL SE**

(56) Entgegenhaltungen:
**DE-A- 3 402 135**
**FR-A- 1 100 157**
**US-A- 2 650 857**
**US-A- 3 370 384**

(73) Patentinhaber: **ALUSUISSE-LONZA SERVICES AG**
**Feldeggstrasse 4**
**CH-8034 Zürich(CH)**

(72) Erfinder: **Widrig, Jakob**
**Ginsterweg 20**
**CH-8400 Winterthur(DE)**
Erfinder: **Wulff, Gunther**
**Chupferwies 502**
**CH-8260 Stein am Rhein(DE)**

## Beschreibung

Die vorliegende Erfindung betrifft eine Fahrzeugtüre, umfassend eine Aussenwand, eine Innenwand sowie einen zwischen Aussen- und Innenwand angeordneten Aggregateträger, welcher vor dem Zusammenfuhren von Aussen- und Innenwand mit weiteren Türteilen, insbesondere einer Fensterhebebetätigung, versehbar ist, und als Befestigungsbasis für wenigstens zwei Türscharniere sowie für wenigstens eine mittels eines Türschlosses betätigbare türseitige Riegelanordnung, welche jeweils mit einer entsprechenden rahmenseitigen Riegelanordnung des Fahrzeugs zusammenwirkt, dient, und gegebenenfalls einen Fensterrahmen, wobei der Aggregateträger aus einem Untergurtprofil mit einseitig nach oben gerichteten, mindestens teilweise einen Hohlrahmen bildenden Schenkeln besteht, und die Schenkel in einem Abstand vom Untergurtprofil durch mindestens eine Strebe miteinander verbunden sind. Fine derartige Fahrzeugtüre ist in der US-A-3 370 384 dargestellt.

Ferner ist aus der DE-A-34 02 135 eine Fahrzeugtüre bekannt, die eine Aussenwand, eine Innenwand sowie einen zwischen Aussen- und Innenwand angeordneten Aggregateträger umfasst, welcher vor dem Zusammenführen von Aussen- und Innenwand mit weiteren Türteilen, insbesondere einer Fensterhebebetätigung, versehbar ist, und als Befestigungsbasis für wenigstens zwei Türscharniere sowie für wenigstens eine mittels eines Türschlosses betätigbare türseitige Riegelanordnung, welche jeweils mit einer entsprechenden rahmenseitigen Riegelanordnung des Fahrzeugs zusammenwirkt, dient. Gegebenenfalls kann der Fahrzeugtüre auch ein Fensterrahmen zugeordnet sein. Der Aggregateträger ist in Form einer Trägerplatte, welche Teil eines Versteifungskastens ist, an welchem die Aussenwand und die Innenwand anbringbar sind, ausgestaltet. Obwohl eine derartige Trägerplatte eine weitgehende Vormontage von Einbauaggregateteilen ermöglicht, werden zur Herstellung der Trägerplatte und insbesondere des zugeordneten Versteifungskastens umfangreiche und aufwendige Verfahrensschritte notwendig.

Aufgabe der vorliegenden Erfindung ist es, eine Fahrzeugtüre der eingangs genannten Art zu schaffen, bei der der Aggregateträger bei hoher Steifigkeit und wirksamem Schutz gegen Aufprallkräfte in einfacher Weise und damit unter wirtschaftlich günstigen Bedingungen, d.h. kostensparend, herstellbar ist. In einer erweiterten Aufgabe soll durch Wahl des Materials als auch dessen Anwendung der Aggregateträger möglichst leicht sein und weitere Türteile, wie zum Beispiel einen Fensterrahmen oder Teile davon, in sich vereinigen oder zumindest deren Montage in einfacher Weise ermöglichen.

Erfindungsgemäss wird die gestellte Aufgabe durch eine Fahrzeugtüre gelöst, welche sich nach dem Wortlaut des Anspruchs 1 auszeichnet.

Vorteilhafte Weiterbildungen der erfindungsgemässen Fahrzeugtüre sind durch die Merkmale der Ansprüche 2 bis 7 gekennzeichnet.

Weitere vorteilhafte Merkmale und Einzelheiten der Erfindung ergeben sich aus der Zeichnung; diese zeigt schematisch in

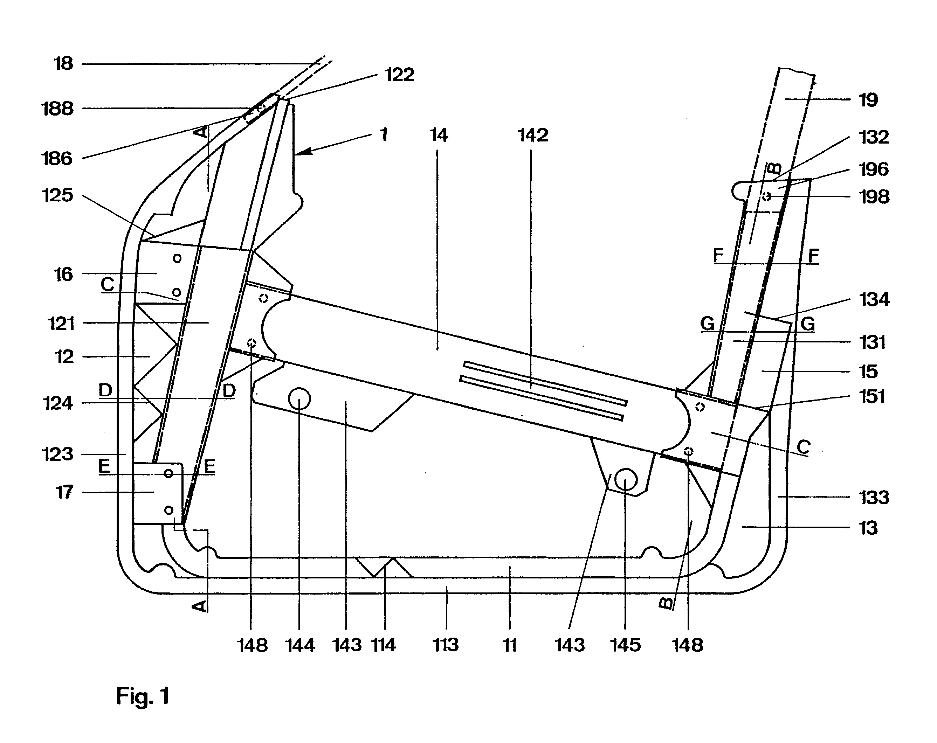

Fig. 1       einen Aggregateträger im Aufriss und in

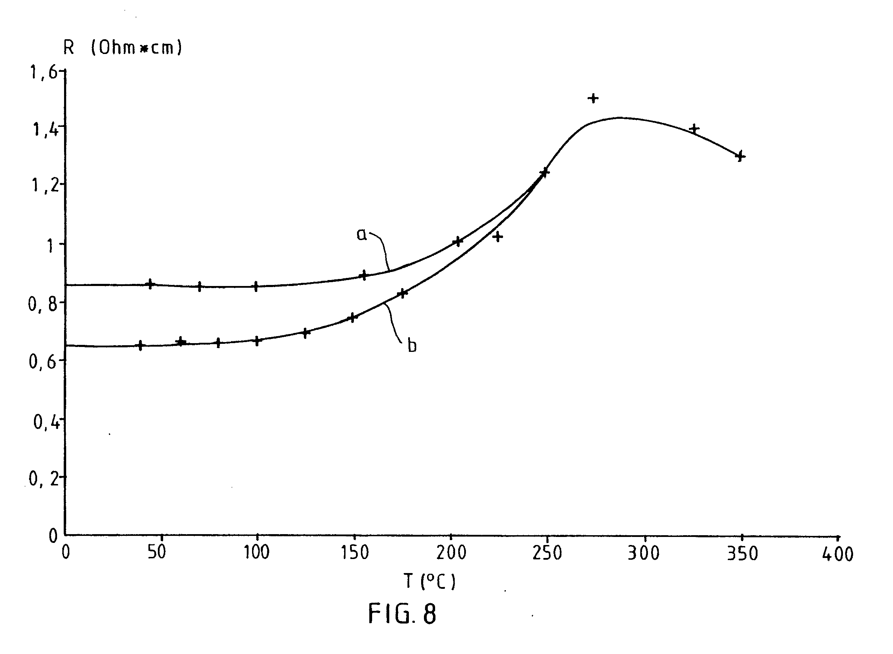

Fig. 2 bis 9       verschiedene Schnitte durch den Aggregateträger nach Fig. 1.

Der Aggregateträger 1 besteht im wesentlichen aus einem Untergurtprofil 11, an dem einseitig nach oben gerichtet Schenkel 12 und 13 angeordnet sind, die jeweils mindestens einen Hohlrahmen 121, 131 aufweisen, wobei die Schenkel 12, 13 in einem Abstand vom Untergurtprofil durch eine oder mehrere Streben 14 miteinander verbunden sind. Vorteilhafterweise wird die Strebe 14 als Hohlprofil 141, vorzugsweise als kastenförmiges Hohlprofil, ausgebildet.

Es hat sich als vorteilhaft erwiesen, die Längsachsen der Hohlrahmen 121,131 etwa parallel zueinander anzuordnen. Bei schief zum Untergurt 11 verlaufenden Streben 12,13 ergibt sich eine N- bzw. Z-förmige Zuordnung. Die Längsachsen der Hohlrahmen 121,131 der Schenkel 12,13 können jedoch auch rechtwinklig zum Untergurt 11 stehen, sodass sich bei dazu schief angeordneter Strebe wiederum eine N- bzw. Z-Anordnung der Teile 12,13,14 resultiert. Es ist jedoch besonders vorteilhaft, wenn die Strebe 14 mit den Schenkeln 12,13 im rechten Winkel zu den Längsachsen der Hohlrahmen 121,131 verbunden wird, denn dann erfolgt die Uebertragung bzw. Einleitung der durch bzw. gegebenenfalls auf die Türe wirkenden Kräfte, z.B. bei einem Unfall, über die Scharniere und das Schloss auf die Karosserie besonders gleichmässig, weil diese Arretierpunkte über das N- bzw. Z-förmige Gerippe (bei rechtwinklig zum Untergurt 11 angeordneten Schenkeln 12,13 H-förmige Gerippe) miteinander in Wirkverbindung stehen.

Von besonderer Wichtigkeit sind die Verbindungen der Strebe 14 mit den Schenkeln 12,13. Grundsätzlich können die Verbindungen durch übliche Massnahmen wie Schrauben, Nieten, Schweissen, usw. herbeigeführt werden. Um besonders hohe Steifigkeit des Aggregateträgers 1 zu erzielen, hat es sich als günstig herausgestellt, wenn die Verbindung der Strebe 14 mit den Schenkeln 12,13 durch teilweises Eingiessen derselben in die Schenkel bei deren Fertigung erfolgt. Ferner ist es in diesem Zusammenhang besonders günstig, wenn der Untergurt 11 und die Schenkel 12,13 aus einem Stück bestehen. Dies ist insbesondere bei Verwendung von Aluminiumlegierungswerkstoffen für die Herstellung der Schenkel 12,13 und/oder der Strebe 14 besonders vorteilhaft. Damit lässt sich in verfahrenstechnisch einfacher und wirtschaftlicher Weise eine Fahrzeugtüre herstellen, bei der das Untergurtprofil 11 und die Schenkel 12,13 aus einem Gussstück gefertigt sind und die Strebe 14 während der Fertigung dieses Gussstücks in dasselbe eingegossen ist. Die Strebe 14 besteht in diesem Fall mit Vorteil aus einem Strangpressprofil, insbesondere aus einem Hohlprofil 141 mit kastenförmigem Querschnitt. Um eine derartige Verbindung weiter zu verbessern, enthält die Strebe 14 an jeder Verbindungsstelle mindestens eine Ausnehmung 148, welche durch den Gussprozess mit Metall ausgefüllt wird.

Die Steifigkeit des Aggregateträgers 1 und damit die Steifigkeit der Türe wird weiter erhöht, indem die Strebe 14 beide Schenkel 12,13 mindestens teilweise durchgreift, wobei ein den Hohlrahmen 121 bildender Schenkelteil mindestens teilweise formschlüssig hintergriffen und der andere den Hohlrahmen 131 bildende Schenkelteil formschlüssig unterfangen wird. Dabei kann das Ende 136 der Strebe 14, welches den den Hohlrahmen 131 bildenden Schenkelteil unterfängt, über den Hohlrahmen 131 hinausragen und gleichzeitig die Basisfläche 151 für eine in den Schenkel 13 integrierte Schlossnische 15 bilden.

Für die Handhabung, Ausgestaltung und Montage der erfindungsgemässen Fahrzeugtüre hat es sich ferner besonders bewährt, dass der Schenkel 12 mit dem durch die Strebe 14 hintergriffenen Schenkelteil mindestens zwei Scharniernischen 16,17 aufweist, und mindestens eine Scharniernische 17 mindestens teilweise in den Hohlrahmen 121 integriert ist.

In der vorteilhaften Ausgestaltung der Erfindung liegt es ferner, dass das Untergurtprofil 11 und die Schenkel 12,13 mit als Auflageflächen oder Führungen für weitere Türteile, insbesondere für Aussenwand, Innenwand, Dichtungen und Kabel, ausgebildetem Flanschen, z.B. Flanschen 113,123,133, und/oder Rinnen (der Uebersichtlichkeit wegen nicht eingezeichnet) versehen sind. Die Flansche 113,123,133 können durch Rippen 114,124,125,134,135 oder durch ähnlich gleichwirkende verstärkt sein.

Die Strebe 14 kann mindestens eine Nut 142 zur Aufnahme von Türteilen, insbesondere der Fensterhebemechanik, und/oder mindestens einen Steg 143 zum Anbringen von Positionspunkten 144,145 aufweisen. Durch die Positionspunkte 144,145 als Fixpunkte für die Bearbeitung wird die Fertigung der Türe, insbesondere mit Hilfe von Automaten, sehr erleichtert.

Die Enden 122,132 der Schenkel 12,13 können auch gleichzeitig mindestens teilweise das Fensterrahmenprofil 18,19 bilden. Es ist aber auch möglich, die Enden 122,132 der Schenkel 12,13 so auszugestalten, dass sie zur Aufnahme eines entsprechend angepassten Fensterrahmenprofils 18,19 dienen. Dabei könnten die Enden 122,132 Teile von Steckverbindungen sein.

Besonders vorteilhaft ist es jedoch, die Verbindung des Fensterrahmenprofils 18,19 mit den Schenkeln 12,13 in analoger Weise wie die Verbindung der Schenkel 12,13 mit der Strebe 14 durch teilsweises Eingiessen der Enden 186,196 des Fensterrahmenprofils 18,19 in die Schenkel 12,13 bei der Fertigung derselben herbeizuführen. Auch eine solche Verbindung kann wiederum durch Vergiessen einer Ausnehmung 188,198 mit Metall an den Enden 186,196 des Fensterrahmenprofils 18,19 zusätzlich verstärkt werden.

**Ansprüche**

1. Fahrzeugtüre, umfassend eine Aussenwand, eine Innenwand sowie einen zwischen Aussen- und Innenwand angeordneten Aggregateträger (1), welcher vor dem Zusammenführen von Aussen- und Innenwand mit weiteren Türteilen, insbesondere einer Fensterhebebetätigung, versehbar ist, und als Befestigungsbasis für wenigstens zwei Türscharniere sowie für wenigstens eine mittels eines Türschlosses betätigbare türseitige Riegelanordnung, welche jeweils mit einer entsprechenden rahmenseitigen Riegelanordnung des Fahrzeugs zusammenwirkt, dient, und gegebenenfalls einen Fensterrahmen, wobei der Aggregateträger (1) aus einem Untergurtprofil (11) mit einseitig nach oben gerichteten, mindestens teilweise einen Hohlrahmen (121,131) bildenden Schenkeln (12,13) besteht, und die Schenkel (12,13) in einem Abstand vom Untergurtprofil (11) durch mindestens eine Strebe (14) miteinander verbunden sind,

   dadurch gekennzeichnet,

   dass die Strebe (14) beide Schenkel (12,13) mindestens teilweise durchgreift, wobei ein den Hohlrahmen (121) bildender Schenkelteil mindestens teilweise formschlüssig hintergriffen und der andere den Hohlrahmen (131) bildende Schenkelteil formschlüssig unterfangen wird.

2. Fahrzeugtüre nach Anspruch 1, dadurch gekennzeichnet, dass das Ende (136) der Strebe (14), welches den Hohlrahmen (131) bildenden Schenkelteil unterfängt, über den Hohlrahmen (131) hinausragt und die Basisfläche (151) für eine in den Schenkel (13) integrierte Schlossnische (15) bildet.

3. Fahrzeugtüre nach Anspruch 1 oder 2, dadurch gekennzeichnet, dass der Schenkel (12) mit dem durch die Strebe (14) hintergriffenen Schenkelteil mindestens zwei Scharniernischen (16,17) aufweist, wobei mindestens eine Scharniernische (17) mindestens teilweise in den Hohlrahmen (121) integriert ist.

4. Fahrzeugtüre nach Anspruch 1 bis 3, dadurch gekennzeichnet, dass die Verbindung der Strebe (14) mit den Schenkeln (12,13) durch teilweises Eingiessen derselben in die Schenkel bei deren Fertigung erfolgt ist.

5. Fahrzeugtüre nach Anspruch 4, dadurch gekennzeichnet, dass die Strebe (14) zur Verankerung derselben mit den Schenkeln (12,13) beim Eingiessen an den Enden (146,147) jeweils mindestens eine Ausnehmung (148) enthält.

6. Fahrzeugtüre nach einem der Ansprüche 1 bis 5, dadurch gekennzeichnet, dass die Strebe (14) mindestens eine Nut (142) zur Aufnahme von Türteilen, insbesondere der Fensterhebemechanik, und/oder mindestens einen Steg (143) zum Anbringen von Positionspunkten (144,145) für die Fertigung der Türe, insbesondere mit Hilfe eines Automaten, aufweist/aufweisen.

7. Fahrzeugtüre nach einem der Ansprüche 1 bis 6, dadurch gekennzeichnet, dass die Enden (122,132) der Schenkel (12,13) mindestens teilweise das Fensterrahmenprofil (18,19) bilden.

**Claims**

1. Vehicle door comprising an outer skin, an inner skin, and an aggregate support (1) arranged between the outer and the inner skins capable of being fitted with further parts of the door, especially a window lifter mechanism, before the outer and inner skins are assembled and serving as the attachment means for at least two door hinges and for at least one bolt arrangement arranged on the door capable of actuation by means of a door lock, which interacts with a corresponding catch arrangement on the frame of the vehicle, and, if appropriate, a window frame, whereby the aggregate support (1) consists of a flanged profile (11) with legs (12, 13) running upwards on one side and at least to some extent forming a box section (121, 131), which legs (12, 13) are connected together at a certain distance from the flanged profile (11) by at least one strut (14),

characterized in that

the strut (14) at least in part passes through both legs (12, 13), in conjunction with which one part of the leg forming the box section (121) is held at least to some extent positively from behind, and the other part of the leg forming the box section (131) is held positively from below.

2. Vehicle door according to Claim 1, characterized in that the end (136) of the strut (14) which holds the part of the leg forming the box section (131) from below projects above the box section (131) and, at the same time, forms the base surface (151) for a lock recess (15) integrated into the leg (13).

3. Vehicle door according to Claims 1 or 2, characterized in that the leg (12) with the part of the leg passing through the strut (14) gripped from behind exhibits at least two lock recesses (16, 17), in conjunction with which at least one lock recess (17) is integrated at least partially in the box section (121).

4. Vehicle door according to Claims 1 to 3, characterized in that the connection of the strut (14) to the legs (12, 13) is made by the partial casting-in of same into the legs in the course of their manufacture.

5. Vehicle door according to Claim 4, characterized in that the strut (14) for the anchoring of same to the legs (12, 13) is provided in the casting process in each case with at least one recess (148) at the ends (146, 147).

6. Vehicle door according to any of the Claims 1 to 5, characterized in that the strut (14) exhibits at least one groove (142) to accept door components, in particular the window lift mechanism, and/or at least one web (143) for the attachment of positioning points (144, 145) for the production of the doors, especially using an automatic machine.

7. Vehicle door according to any of the Claims 1 to 6, characterized in that the ends (122, 132) of the legs (12, 13) can also form the window frame profile (18, 19), at least in part.

**Revendications**

1. Porte de véhicule, comprenant une paroi extérieure, une paroi intérieure et un support de dispositifs (1) disposé entre la paroi extérieure et la paroi intérieure, et qui peut être équipé d'autres éléments de la porte, en particulier d'une commande de lève-glace, avant l'assemblage de la paroi extérieure et de la paroi intérieure, et qui sert de base de fixation pour au moins deux charnières de porte, ainsi que pour au moins un dispositif de verrouillage côté porte qui peut être actionné à l'aide d'une serrure de porte et qui coopère avec un dispositif de verrouillage correspondant, côté encadrement, du véhicule, et éventuellement un encadrement de fenêtre, le support de dispositifs (1) étant composé d'un profilé de ceinture inférieure (11) possédant des branches (12, 13) dirigées unilatéralement vers le haut, et qui forment au moins partiellement un cadre creux (121, 131), et les branches (12, 13) étant assemblées l'une à l'autre par au moins une barre (14) à une certaine distance du profilé de ceinture inférieure (11) caractérisée,
en ce que la barre (14) traverse au moins partiellement les deux branches (12, 13), une partie de branche qui forme le cadre creux (121) étant accrochée par l'arrière au moins partiellement, avec liaison par sûreté de forme et l'autre partie de branche, qui forme le cadre creux (131) étant accrochée par dessous avec liaison de sûreté de forme.

2. Porte de véhicule selon la revendication 1, caractérisée en ce que l'extrémité (136) de la barre (14) qui accroche par dessous la partie de branche qui forme le cadre creux (131) se prolonge au-delà du cadre creux (131) et forme la surface de base (151) pour une niche de serrure (15) intégrée dans la branche (13).

3. Porte de véhicule selon la revendication 1 ou 2, caractérisée en ce que la branche (12) qui présente la partie de branche qui est accrochée par l'arrière par la barre (14) présente au moins deux niches de charnières (16, 17), au moins une niche de charnière (17) étant au moins partiellement intégrée dans le cadre creux (121).

4. Porte de véhicule selon les revendications 1 à 3, caractérisée en ce que l'assemblage reliant la barre (14) aux branches (12, 13) s'effectue par moulage partiel de cette barre dans les branches au moment de la fabrication de ces branches.

5. Porte de véhicule selon la revendication 4, caractérisée en ce que, pour l'ancrage de la barre (14) dans les branches (12, 13), au moment du moulage, cette barre présente au moins un évidement (148) à chacune de ses extrémités (146, 147).

6. Porte de véhicule selon une des revendications 1 à 5, caractérisée en ce que la barre (14) présente au moins une rainure (142) pour recevoir des éléments de la porte, en particulier le mécanisme de lève-glace, et/ou au moins une nervure (143) destinée à porter des points de position (144, 145) pour la fabrication de la porte, en particulier lorsqu'elle est fabriquée à l'aide d'un automate.

7. Porte de véhicule selon une des revendications 1 à 6, caractérisée en ce que les extrémités (122, 132) des branches (12, 13) forment au moins partiellement le profilé de l'encadrement de fenêtre (18, 19).

**Fig. 1**

EP 0 274 985 B1

FIG. 8

EP 0 274 985 B1